# EUROPEAN PATENT SPECIFICATION

(11) **EP 2 296 418 B1**
(45) Date of publication and mention of the grant of the patent: **05.09.2018**
(21) Application number: 09804470.4
(22) Date of filing: 21.07.2009
(51) Int. Cl.: H04W 60/04, H04W 8/12, H04W 36/00

(54) **PROCESSING METHOD, SYSTEM AND APPARATUS FOR MOBILITY MANAGEMENT**
VERARBEITUNGSVERFAHREN, SYSTEM UND VORRICHTUNG ZUR MOBILITÄTSVERWALTUNG
PROCÉDÉ DE TRAITEMENT, SYSTÈME ET APPAREIL DE GESTION DE LA MOBILITÉ

(30) Priority: 05.08.2008 CN 200810129669
(43) Date of publication of application: 16.03.2011
(73) Proprietor: Huawei Technologies Co., Ltd., Longgang District Shenzhen, Guangdong 518129 (CN)
(72) Inventor: CHEN, Zhongping, Shenzhen Guangdong 518129 (CN); HU, Weihua, Shenzhen Guangdong 518129 (CN); WU, Wenfu, Shenzhen Guangdong 518129 (CN)
(74) Representative: Körber, Martin Hans
(86) International application number: PCT/CN2009/072849
(87) International publication number: WO 2010/015170

(56) References cited:
- EP-A1- 1 860 904
- CN-A- 101 039 510
- CN-A- 101 043 705
- CN-A- 101 047 947
- CN-A- 101 170 816
- ERICSSON: "Mapping between GUTI and P-TMSI", 3GPP DRAFT; S2-083236-GUTI-AND-PTMSI.PA1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080502, 2 May 2008 (2008-05-02), XP050265474, [retrieved on 2008-05-02]
- NOKIA SIEMENS NETWORKS ET AL: "Clarification on IP address allocation for non-3GPP IP access netoworks", 3GPP DRAFT; S2-082400(IPADDRESS_UNTRUSTED)2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju; 20080401, 1 April 2008 (2008-04-01), XP050264727, [retrieved on 2008-04-01]
- VODAFONE: "Simplification of ISR by only supporting ISR on a combined MME and SGSN", 3GPP DRAFT; S2-082385, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju; 20080401, 1 April 2008 (2008-04-01), XP050264717, [retrieved on 2008-04-01]

## Description

### Field of the Invention

The present invention relates to the communication field, and in particular, to a method, a system, and a device for mobility management processing.

### Background of the Invention

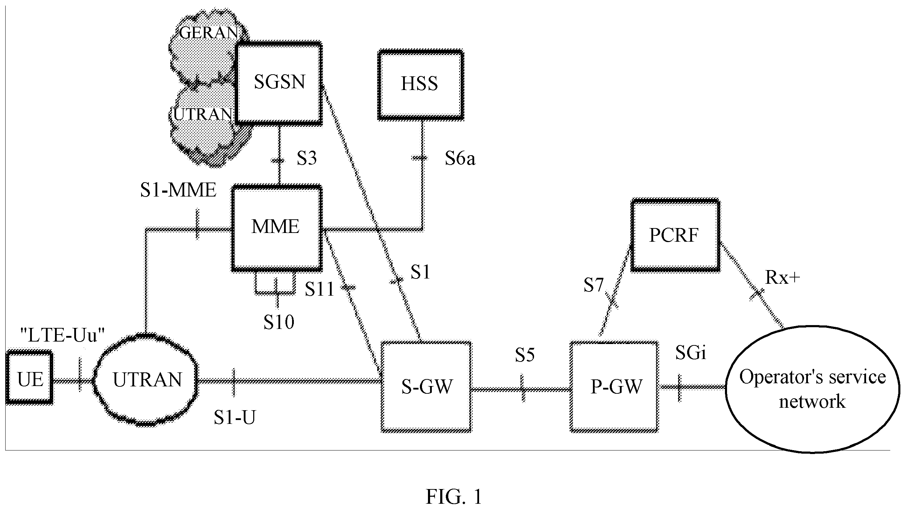

FIG. 1 shows an evolved radio network architecture provided in the prior art. A core network of a current evolved radio network includes three logical functional entities: Mobility Management Entity (MME), Serving Gateway (S-GW), and Packet Data Network (PDN) Gateway (P-GW). The MME is responsible for Non Access Stratum (NAS) signaling encryption, roaming and tracing, allocation of temporary user identities, and security. The MME corresponds to the control plane part of the Serving GPRS Support Node (SGSN) in the current Universal Mobile Telecommunications System (UMTS). The S-GW is responsible for local mobility anchors and the internal mobility anchors in a 3^{rd} Generation Partnership Project (3GPP) system, and lawful interception of information. The P-GW is responsible for policy enforcement and charging, and lawful interception.

However, it has become apparent that the Idle mode Signaling Reduction (ISR) requires a User Equipment (UE) to register with a 2G/3G system and a System Architecture Evolution (SAE) system concurrently. That is, a consistent state indication is maintained among the four devices: SGSN, MME, S-GW, and UE. The state indication indicates whether the UE has started the ISR function and imposed an impact on almost all signaling processes. The implementation of the solution is rather complicated.

Because the SGSN and the MME are independent functional entities, to support the ISR, the MME and SGSN need to synchronize bearers with each other. Bearer synchronization is defined as follows: When the UE adds, modifies or deletes a bearer under a Radio Access Type (RAT), the UE does not need to synchronize the change to other different RATs in real time. Instead, when the UE reselects a cell of a different RAT for access, the UE initiates synchronization of the bearer context afterward. Because the foregoing synchronization solution is mixed with the security mechanism, many complicated problems occur. 3GPP document S2-083236 "Mapping between GUTI and P-TMSI" is a relative close prior art. According to S2-083236, when the UE detects a change to a new TA by discovering that its current TAI is not in the list of TAIs that the UE registered with the network, the UE sends a TAU Request message to the eNodeB, the eNodeB forwards the TAU Request message to a new MME, and then the new MME sends a TAU Accept message to the UE. A combined SGSN/MME may send an indication to the UE in the TAU Accept message to tell the UE that it is registered at a combined node. A document entitled "Simplification of ISR by only supporting ISR on a combined MME and SGSN" by VODAFONE published at "3GPP DRAFT; S2-082385, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. Jeju; 20080401, 1 April 2008 (2008-04-01)", discloses simplification of ISR by only supporting ISR on a combined MME and SGSN. When the mobile Attaches or performs an RA or TA update, the Combined MME-SGSN: i) ensures that the mobile has valid LTE and 2G/3G security contexts by sending a combined 'authentication request' containing both LTE and 2G/3G security challenges. ii) allocates a P-TMSI and GUTI to the mobile iii) sends a "list of areas" in the RA/TA Update Accept message that contains one RA plus the Tracking Area List.

### Summary of the Invention

The present invention provides a method, a system and a device for mobility management processing to simplify the implementation of the ISR function, to optimize network performance, and to reduce costs of operating and maintaining network devices. The invention is defined in the appended claims. According to the first aspect a method for mobility management processing is provided, in this method, a UE accesses a core network through a first RAT type, and the method includes:
by a combined MME, obtaining current first location area information and current second location area information of the UE, where the combined MME integrates the functions of a MME and a Serving GPRS Support Node (SGSN), the current second location area information derives from mapping of the current first location area information; and
sending a message that carries an activation indication to the UE according to the current first location area information and the current second location area information, where the activation indication is used for instructing the UE to activate the ISR in idle mode, wherein the method further comprises: by a Serving Gateway, S-GW, obtaining a message sent by the combined MME, wherein: the message carries a first control plane address, a second control plane address, a RAT type, a combined indication, and an activation indication; the activation indication is used for notifying the S-GW to activate the ISR; and the combined indication indicates to the S-GW that the message is sent by the combined MME; and activating the ISR according to the activation indication, selecting a control plane address from the first control plane address and the second control plane address according to the RAT type, and sending a downlink message to the selected control plane address.

According to the second aspect a combined MME is provided, wherein the combined MME integrates the functions of a MME and a Serving GPRS Support Node (SGSN), and the combined MME is connected to a GERAN and a UTRAN to provide communication services for a UE. The combined MME includes:
an obtaining module, configured to obtain current first location area information and current second location area information of the UE, where the current second location area information derives from mapping of the current first location area information; and
a first sending module, configured to send a message that carries an activation indication to the UE according to the current first location area information and the current second location area information obtained by the obtaining module, where the activation indication is used for instructing the UE to activate the ISR in idle mode, wherein the combined MME further comprises: a second sending module, configured to send a message to a Serving Gateway, S-GW, wherein the message carries a first control plane address, a second control plane address, a Radio Access Type, RAT, a combined indication, and an activation indication; and a receiving module, configured to receive a downlink message sent by the S-GW.

According to the third aspect a system for mobility management processing includes a combined MME according to the second aspect and a UE, wherein the UE is configured to: access a core network through a first RAT type, obtain the activation indication sent by the combined MME, and activate the ISR according to the activation indication.

The technical solution according to the present invention brings the following benefits:
Through the combined MME provided by the present invention, the ISR association. of the UE can be activated directly, the implementation of the ISR function is simplified, the network performance is optimized, and the costs of operating and maintaining the network devices are reduced.

### Brief Description of the Drawings

FIG. 1 shows an evolved radio network architecture provided in the prior art;
FIG. 2 is a flowchart of a method for mobility management processing according to a first embodiment of the present invention;
FIG. 3 is a flowchart of activating an ISR association according to the first embodiment of the present invention;
FIG. 4 is a flowchart of a method for mobility management processing according to a second embodiment of the present invention;
FIG. 5 is a flowchart of activating an ISR association according to the second embodiment of the present invention;
FIG. 6 is a flowchart of a method for mobility management processing according to a third embodiment of the present invention;
FIG. 7 shows how to notify the S-GW in an ISR activation process according to the third embodiment of the present invention;
FIG. 8 is a flowchart of a method for mobility management processing according to a fourth embodiment of the present invention;
FIG. 9 is a flowchart of context synchronization in a combined MME according to the fourth embodiment of the present invention;
FIG. 10 is a flowchart of a method for mobility management processing according to a fifth embodiment of the present invention;
FIG. 11 is a flowchart of context synchronization in a combined MME according to the fifth embodiment of the present invention;
FIG. 12 shows a structure of a system for mobility management processing according to a sixth embodiment of the present invention;
FIG. 13 shows another structure of a system for mobility management processing according to the sixth embodiment of the present invention;
FIG. 14 shows a structure of a combined MME according to a seventh embodiment of the present invention;
FIG. 15 shows a structure of an access NE according to the seventh embodiment of the present invention;
FIG. 16 shows a structure of an S-GW according to an eighth embodiment of the present invention; and
FIG. 17 shows a reference network architecture according to an embodiment of the present invention.

### Detailed Description of the Embodiments

To make the technical solution, objectives and merits of the present invention clearer, the following describes the embodiments of the present invention in more detail with reference to accompanying drawings.

The embodiments of the present invention provide a combined MME. The combined MME integrates the functions of the traditional MME and SGSN. The integration of the MME and the SGSN simplifies the operation and maintenance, reduces the costs, and optimizes the product architecture design, and furthermore, reduces signaling on each interface, speeds up the mobility management processes such as the handover process, and simplifies implementation of the ISR function. Evidently, as an integration of the MME and the SGSN, the combined MME reduces the signaling load on the S3/Gn interface.

Through the combined MME provided in an embodiment of the present invention, the inter-NE signaling interaction required by the ISR becomes internal. The signaling interaction includes: setup of an ISR association (saving the address of the opposite party mutually), and bearer context synchronization. Because the integration of the SGSN and the MME enables internal bearer context synchronization, the implementation does not depend on the instruction from the UE or restrict the use of a Temporary Mobile Subscriber Identity (TMSI). Further, the combined MME may shield the impact, caused by the ISR, on the S-GW That is, even if the ISR is enabled, the combined MME may act as if the ISR is not enabled to the S-GW

The following details the functions of a combined MME provided in the embodiments of the present invention. As an integration of the SGSN and the MME, the combined MME simplifies implementation of the ISR function and optimizes the network performance.

### Embodiment 1

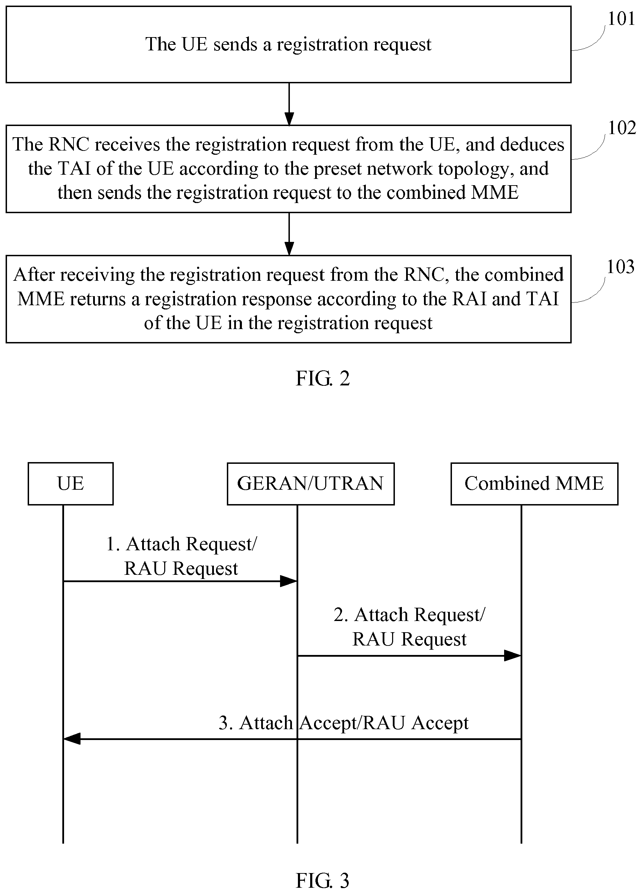

FIG. 2 is a flowchart of a method for mobility management processing according to the first embodiment of the present invention. Supposing that the UE accesses the SGSN for the first time, the method includes the following steps:
Step 101: The UE sends a registration request.

In this embodiment, it is assumed that the UE accesses the core network through a 2G/3G access network.

In this step, the registration request may be an Attach Request or Routing Area Update (RAU) request.

Step 102: After receiving the registration request from the UE, a Radio Network Controller (RNC) in the 2G/3G access network knows the current Routing Area Identity (RAI) of the UE. Afterward, the RNC obtains the Tracking Area Identity (TAI) of the UE. The TAI of the UE may be deduced according to the preset network topology, namely, a mapping relation between the RAI and the TAI. After obtaining the TAI and the RAI of the UE, the RNC sends a registration request to the combined MME. The registration request carries the RAI and the TAI of the UE.

In this step, the registration request may be an Attach Request or RAU request that carries the RAI and the TAI of the UE.

Step 103: After receiving the registration request from the RNC, the combined MME returns a registration response according to the RAI and the TAI in the registration request. The registration response carries an ISR indication, a Packet Temporary Mobile Subscriber Identity (P-TMSI) allocated to the UE, a Globally Unique Temporary Identity (GUTI), an RAI, and a TAI list. The registration response may further carry a combined MME indication such as "combined indication". The combined MME indication is used for notifying the UE that the registration response is sent by the combined MME, and therefore, the UE knows that the UE is currently registered with the combined MME. This combined MME indication may be implicit. For example, the UE may perceive that the UE is currently registered with the combined MME by obtaining the P-TMSI and the GUTI simultaneously.

The ISR indication is used for instructing the UE to activate the ISR association. In the technical solution under the present invention, if the UE activates the ISR association in the scenario of the combined MME, when the UE perceives a bearer change (for example, a bearer is added, modified or deleted) subsequently, the UE chooses, according to the combined MME indication, to maintain the ISR association rather than deactivate the ISR association.

In this step, the registration response may be an Attach Accept or RAU Accept message that carries the ISR indication, P-TMSI allocated to the UE, GUTI, RAI, and TAI list.

Persons skilled in the art understand that, based on the same principles, when the UE accesses the core network through an E-UTRAN, the eNodeB (base station) of the E-UTRAN may deduce the RAI according to the obtained TAI of the UE, and report the TAI and the RAI together to the combined MME in the core network. Afterward, the combined MME returns a response message according to the TAI and RAI of the UE. The response message carries the ISR indication, P-TMSI allocated to the UE, GUTI, RAI, and TAI list.

The method provided in this embodiment involves only configuration of the topology of the access network, and the workload of configuring the network topology is not too great compared with the workload of configuring each single NE (RNC/eNodeB).

FIG. 3 is a flowchart of activating an ISR association according to the first embodiment of the present invention. Through the method provided in this embodiment, when the UE is registered with the network, the combined MME can activate the ISR directly by using the attach or Inter RAU/TAU process of the user, allocate a P-TMSI and a GUTI to the UE simultaneously, and specify the corresponding RAI and TAI list for the user.

### Embodiment 2

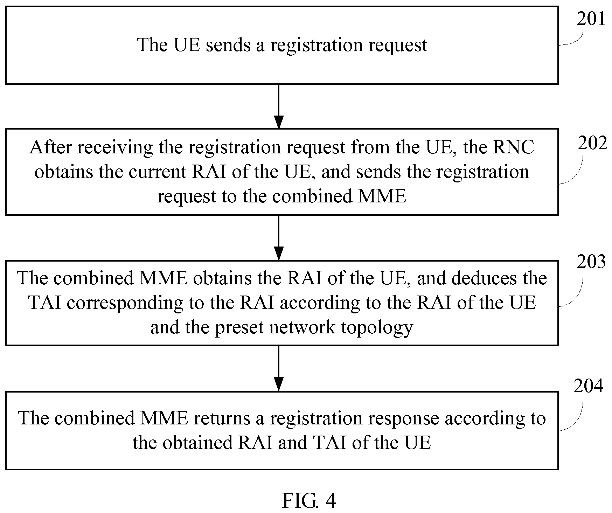

FIG. 4 is a flowchart of a method for mobility management processing according to the second embodiment of the present invention. It is assumed that the UE accesses the SGSN for the first time. The second embodiment differs from the first embodiment in that the network topology that reflects the mapping relation between the RAI and the TAI is configured on the combined MME. The method includes the following steps:
Step 201: The UE sends a registration request.

In this embodiment, it is still assumed that the UE accesses the core network through a 2G/3G access network.

In this step, the registration request may be an Attach Request or RAU request.

Step 202: After receiving the registration request from the UE, the RNC in the 2G/3G access network knows the current RAI of the UE, and sends a registration request that carries the RAI of the UE to the combined MME.

In this step, the registration request may be an Attach Request or RAU request that carries the RAI and the TAI of the UE.

Step 203: After receiving the registration request from the RNC, the combined MME obtains the RAI of the UE, and deduces the TAI corresponding to the RAI according to the RAI of the UE and the preset network topology (namely, a mapping relation between the TAI and the RAI) of the MME.

Step 204: According to the RAI and the TAI of the UE, the combined MME returns a registration response that carries the ISR indication, P-TMSI allocated to the UE, GUTI, RAI, and TAI list. The registration response may further carry a combined MME indication such as "combined indication". The combined MME indication is used for notifying the UE that the registration response is sent by the combined MME, and therefore, the UE knows that the UE is currently registered with the combined MME. This combined MME indication may be implicit. For example, the UE may perceive that the UE is currently registered with the combined MME by obtaining the P-TMSI and the GUTI simultaneously.

The ISR indication is used for instructing the UE to activate the ISR association. In the technical solution under the present invention, if the UE activates the ISR association in the scenario of the combined MME, when the UE perceives a bearer change subsequently (for example, a bearer is added, modified or deleted), the UE is sure that the UE is registered with the combined MME according to the combined MME indication and chooses to maintain the ISR association rather than deactivate the ISR association.

In this step, the registration response may be an Attach Accept or RAU Accept message that carries the ISR indication, P-TMSI allocated to the UE, GUTI, RAI, and TAI list.

Persons skilled in the art understand that, based on the same principles, when the UE accesses the core network through an E-UTRAN, the combined MME in the core network may also deduce the RAI according to the TAI reported by the eNodeB of the E-UTRAN.

The method provided in this embodiment involves no change of the existing access network, but involves only configuration of the network topology on the combined MME.

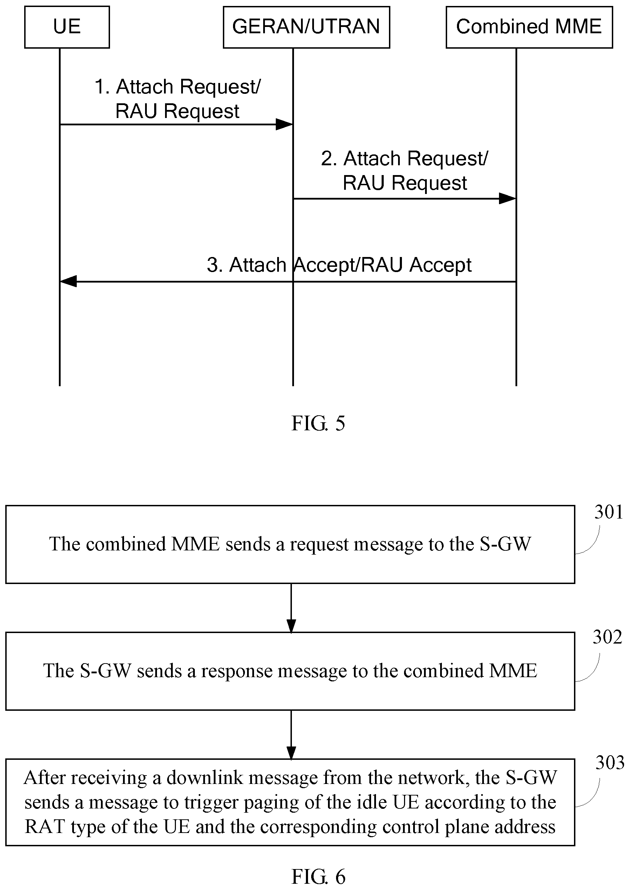

FIG. 5 is a flowchart of activating an ISR association according to the second embodiment of the present invention. Through the method provided in this embodiment, the combined MME can activate the ISR directly by using the attach or Inter RAU/TAU process of the user, allocate a P-TMSI and a GUTI to the UE simultaneously, and specify the corresponding RAI and TAI list for the user.

The first embodiment and the second embodiment above deal with how the combined MME notifies the UE to activate the ISR in the mobility management process. The third embodiment below deals with how the combined MME notifies an S-GW to activate the ISR in the mobility management process.

### Embodiment 3

FIG. 6 is a flowchart of a method for mobility management processing according to the third embodiment of the present invention. This method deals with how to notify the S-GW in the ISR activation process. Supposing that the UE accesses the SGSN for the first time, the method includes the following steps:
Step 301: The combined MME sends a request message to the S-GW The message carries the first control plane address in the combined MME, the second control plane address, RAT type, ISR indication, and combined indication.

In the process of notifying the S-GW to activate the ISR in this embodiment, because this embodiment supposes that the UE accesses the SGSN for the first time, the first control plane address is the control plane address of the SGSN, namely, an SGSN Tunnel Endpoint Identifier (TEID); accordingly, the RAT type is set to "access through the 2G/3G access network"; the second control plane address is the control plane address of the MME, namely, an MME TEID; the ISR indication is used for instructing the S-GW to activate the ISR; the combined indication is used for notifying the S-GW that the sender of the request message is a combined MME which integrates the SGSN with the MME. The combined indication may be implicit. For example, the S-GW may obtain the first control plane address and the second control plane address simultaneously to know that the sender of the request message is a combined MME which integrates the SGSN with the MME.

As regards the setting of the RAT type above, "1" may represent the first RAT type (such as SGSN access), and "0" may represent the second RAT type (such as MME access). This embodiment does not restrict the setting of the RAT type.

In this step, the request message may be a Create Default Bearer Request that carries information elements of MME TEID for control plane, SGSN TEID for control plane, address, RAT type, ISR, and combined indication. Through this Create Default Bearer Request, the SGSN TEID for control plane and the MME TEID for control plane are transmitted to the S-GW The ISR instructs the S-GW to activate the ISR function; and the combined indication indicates to the S-GW that the SGSN is integrated with the MME. Afterward, the S-GW selects a proper control plane address according to the stored RAT type. Persons skilled in the art understand that the Create Default Bearer Request may carry other information elements such as International Mobile Subscriber Identity (IMSI) and Default Bearer Quality of Service (QoS).

In this step, the request message may be a Create Bearer Request that carries information elements such as MME TEID for control plane, SGSN TEID for control plane, address, RAT type, ISR, and combined indication. Persons skilled in the art understand that the Create Bearer Request may carry other information elements such as IMSI and bearer contexts.

In this step, the request message may be an Update Bearer Request that carries information elements such as MME TEID for control plane, SGSN TEID for control plane, address, RAT type, ISR, and combined indication. Persons skilled in the art understand that the Update Bearer Request may carry other information elements such as QoS Negotiated and serving network.

Step 302: The S-GW sends a response message to the combined MME.

After accepting the request message, the S-GW sends a response message to the combined MME. In this step, the response message may be a Create Default Bearer Response/Create Bearer Response/Update Bearer Response in response to the Create Default Bearer Request/Create Bearer Request/Update Bearer Request mentioned in step 301.

Step 303: After receiving a downlink message from the network, the S-GW sends a message to trigger paging of the idle UE according to the RAT type of the UE and the corresponding control plane address.

The downlink message from the network may be downlink data or signaling.

After receiving the request message from the combined MME, the S-GW obtains the RAT type of the UE according to the information elements carried in the request message (the first control plane address of the combined MME, the second control plane address, RAT type, ISR indication, and combined indication), and selects the control plane address corresponding to the RAT type. For example, if the RAT type of the UE is SGSN, the S-GW selects the SGSN TEID as the control plane address.

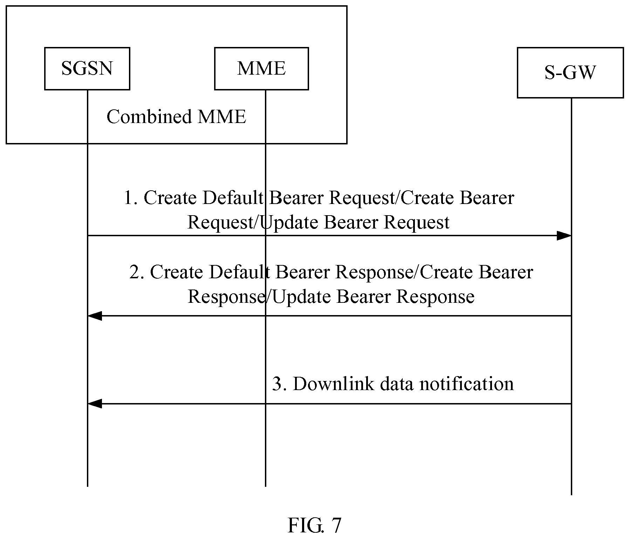

Described above is a method for mobility management processing in embodiments of the present invention. FIG. 7 shows how to notify the S-GW in an ISR activation process according to the third embodiment of the present invention. The combined MME sends the SGSN control plane address and the MME control plane address to the S-GW, and indicates that the MME is a combined MME. Afterward, the S-GW selects a proper control plane address according to the stored RAT type to implement paging of the idle UE.

The embodiments above deal with how a combined MME notifies the UE to activate the ISR and notifies the S-GW to activate the ISR in a mobility management process. The following embodiments deal with bearer context synchronization of the combined MME after the ISR function is started.

### Embodiment 4

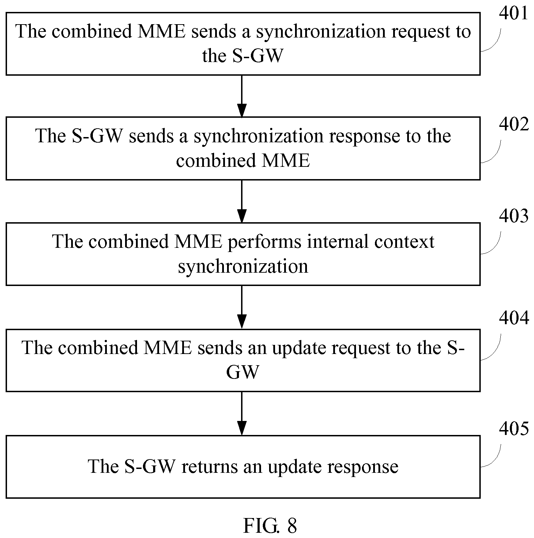

FIG. 8 is a flowchart of a method for mobility management processing according to the fourth embodiment of the present invention. Supposing that the UE accesses the SGSN for the first time, the method includes the following steps:
Step 401: The combined MME sends a synchronization request to the S-GW The synchronization request carries RAT type, first control plane address, ISR indication, and combined indication.

Because this embodiment supposes that the UE accesses the SGSN for the first time, the first control plane address is SGSN TEID for control plane. In practice, the synchronization request may be in any of the following forms:
The synchronization request is a Create Default Bearer Request that carries RAT type, SGSN TEID for control plane, ISR indication, and combined indication. Persons skilled in the art understand that the Create Default Bearer Request may carry other information elements additionally such as IMSI and Selection Mode. The RAT type indicates the access type of the UE to the S-GW; the ISR indication is used for instructing the S-GW to activate the ISR; and the combined indication is used for notifying the S-GW that the synchronization request is sent by the combined MME. Subsequently, the S-GW selects a proper control plane address according to the RAT type of the UE.
2. The synchronization request is a Create Bearer Request that carries RAT type, SGSN TEID for control plane, ISR indication, and combined indication. The Create Bearer Request carries other information elements additionally such as QoS Negotiated.
3. The synchronization request is an Update Bearer Request that carries RAT type, SGSN TEID for control plane, ISR indication, and combined indication. The Update Bearer Request carries other information elements additionally such as new MME Address and TEID and QoS Negotiated.

Step 402: The S-GW sends a synchronization response to the combined MME.

The synchronization response may be a Create Default Bearer Response/Create Bearer Response/Update Bearer Response in response to the Create Default Bearer Request/Create Bearer Request involved in step 401.

Step 403: The combined MME performs internal context synchronization.

In this embodiment, because the UE accesses the SGSN for the first time, the internal context synchronization in step 403 is synchronization of the context on the MME side in the combined MME to the context on the SGSN side. For example, the context of the UE on the SGSN side in the combined MME is ABC; the combined MME performs context synchronization, and converts ABC into the MME-side context information "DEF". In this way, the MME-side context is synchronized to the SGSN-side context in the combined MME.

Further, the internal context synchronization process may be triggered by a service request sent by the UE. That is, when the UE needs to perform a service on the MME side, the UE in the idle state sends a service request to the network side, and the combined MME triggers the process of synchronizing contexts between the MME side and the SGSN side according to the service request.

Step 404: The combined MME sends an update request to the S-GW The update request carries a control plane address of the MME in the combined MME. The update request is sent to implement bearer synchronization.

In this step, the update request may be an Update Bearer Request that carries the MME Address and TEID, Evolved Packet System (EPS) Bearer ID, and Bearer Synch. The Bearer Synch indicates that the Update Bearer Request is designed to perform bearer synchronization. Further, if the internal context synchronization process is triggered by a service request, because this process actively triggers the MME or SGSN to send an Update Bearer Request to the S-GW, the service request does not need to carry a Bearer Synch indication. That is, the Bearer Synch in this embodiment is a trigger indication, and indicates that the message which carries this indication is designed to trigger bearer synchronization.

Alternatively, a new message may be added to serve as the update request. For example, a Bearer Synch Request is added as the update request. This request carries an EPS Bearer Identity, and an MME Address and TEID.

Step 405: The S-GW returns an update response.

The update response involved in this step may be an Update Bearer Response, or a newly added Bearer Synch Response that carries the EPS Bearer Identity in response to the request involved in step 404.

This embodiment supposes that the UE accesses the SGSN for the first time. Persons skilled in the art understand that, based on the same principles, when the UE accesses the MME for the first time, the processing method is similar and thus is not repeatedly described.

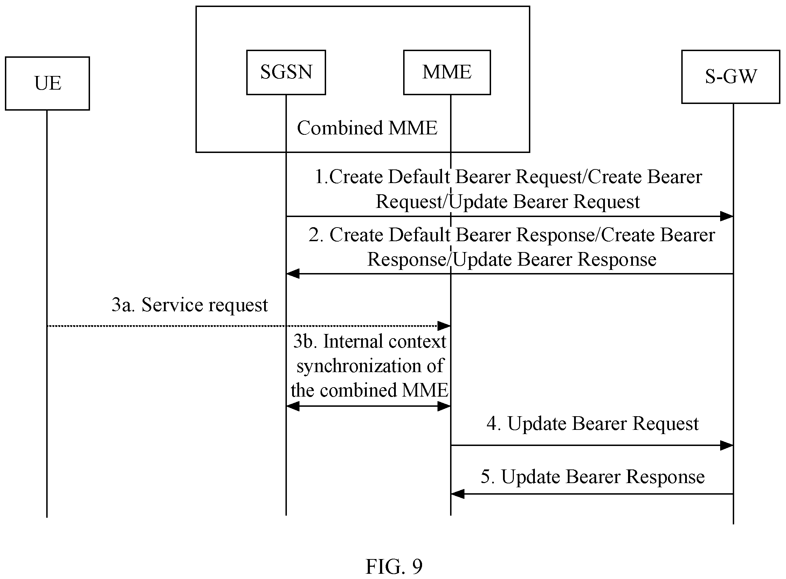

Described above is a method for mobility management processing in embodiments of the present invention. FIG. 9 is a flowchart of context synchronization in a combined MME according to the fourth embodiment of the present invention. Because the combined MME provides functions of both the SGSN and the MME, the combined MME can coordinate the SGSN with the MME internally, and shield the impact, caused by the ISR, on the S-GW from the upstream node. That is, after starting the ISR function, the combined MME creates only one control plane channel to the S-GW, thus shielding the impact, caused by the ISR function, on the S-GW In this way, the S-GW does not need to perceive the ISR function, and the start of the ISR function involves no S-GW

### Embodiment 5

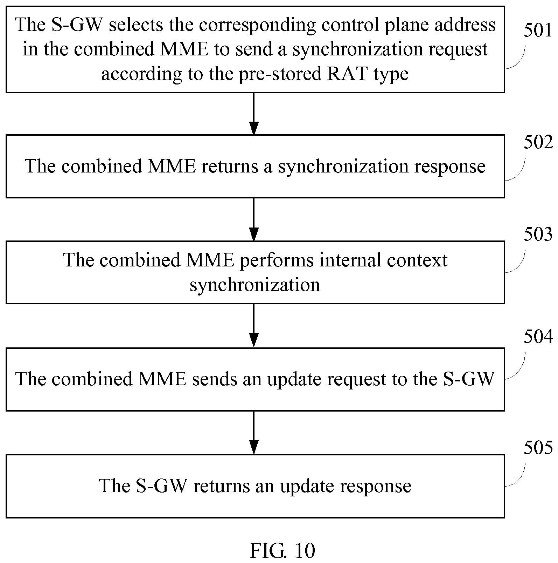

FIG. 10 is a flowchart of a method for mobility management processing according to the fifth embodiment of the present invention. This embodiment differs from the fourth embodiment in that, the S-GW triggers the combined MME to perform context synchronization, supposing that the UE camps on the SGSN after the ISR function is started. The method in this embodiment includes the following steps:
Step 501: The S-GW selects the corresponding control plane address in the combined MME to send a synchronization request according to the pre-stored RAT type.

Because this embodiment supposes that the UE camps on the SGSN, the corresponding control plane address is SGSN TEID.

The synchronization request involved in this step may be a Create Dedicated Bearer Request. The Create Dedicated Bearer Request carries these information elements: IMSI, Protocol Transaction Identifier (PTI), Bearer QoS, Uplink Traffic Flow Template (UL TFT), Sl-TEID, Linked EPS Bearer Identity (LBI), and Downlink Traffic Flow Template (for Proxy Mobile IP-based S5/S8) (DL TFT (for PMIP-based S5/S8)).

Alternatively, the synchronization request involved in this step is an Update Bearer Request. The Update Bearer Request carries these information elements: PTI, EPS Bearer Identity, Bearer QoS, UL TFT, and DL TFT (for PMIP-based S5/S8).

Alternatively, the synchronization request involved in this step is a Delete Bearer Request which carries these information elements: PTI, and EPS Bearer Identity.

Step 502: The combined MME returns a synchronization response.

In this step, because the UE camps on the SGSN, the synchronization response is returned by the SGSN in the combined MME.

The synchronization response may be a Create Dedicated Bearer Response that carries the EPS Bearer Identity and the RNC-TEID or an Update Bearer Response that carries the EPS Bearer Identity or a Delete Bearer Response that carries the EPS Bearer Identity in response to the Create Dedicated Bearer Request or Update Bearer Request or Delete Bearer Request involved in step 501.

Step 503: The combined MME performs internal context synchronization.

The internal context synchronization in step 503 is synchronization of the context on the MME side in the combined MME to the context on the SGSN side. For example, the context of the UE on the SGSN side in the combined MME is ABC; the combined MME performs context synchronization, and converts ABC into the MME-side context information "DEF". In this way, the MME-side context is synchronized to the SGSN-side context in the combined MME.

Step 504: The combined MME sends an update request to the S-GW The update request is an instruction of bearer synchronization.

In this step, the update request is sent by the MME in the combined MME, and may be:
an Update Bearer Request that carries these information elements: MME Address and TEID for control plane, EPS Bearer ID, and Bearer Synch, where the MME Address and TEID give the control plane address of the MME and the Bearer Synch is an instruction of bearer synchronization;
   or
a Delete Bearer Request that carries the MME Address and TEID for control plane, where the Delete Bearer Request is an instruction of deleting the bearer and releasing the S-GW resource;
   or
a newly added message such as a Bearer Synch Request that carries the information elements such as EPS Bearer Identity, and MME Address and TEID for control plane.

Step 505: The S-GW returns an update response.

The update response involved in this step may be an Update Bearer Response, or a Delete Bearer Response, or a newly added Bearer Synch Response that carries the EPS Bearer Identity in response to the request involved in step 504.

This embodiment supposes that the UE camps on the SGSN. Persons skilled in the art understand that, based on the same principles, when the UE camps on the MME, the processing method is similar, and thus is not repeatedly described.

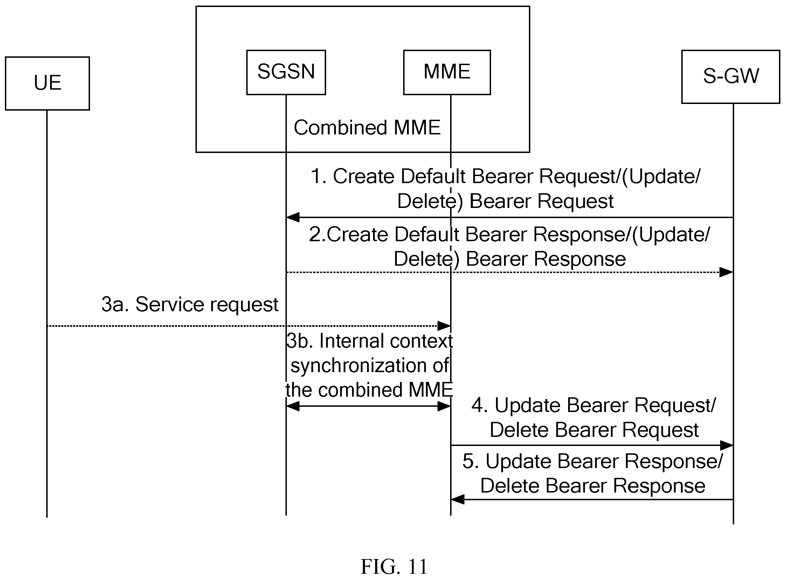

Described above is a method for mobility management processing in embodiments of the present invention. FIG. 11 is a flowchart of context synchronization in a combined MME according to the fifth embodiment of the present invention. Because the combined MME provides functions of both the SGSN and the MME, the combined MME can coordinate the SGSN with the MME internally, and shield the impact, caused by the ISR, on the S-GW from the upstream node. That is, after starting the ISR function, the combined MME creates only one control plane channel to the S-GW, thus shielding the impact, caused by the ISR function, on the S-GW In this way, the S-GW does not need to perceive the ISR function, and the start of the ISR involves no S-GW

### Embodiment 6

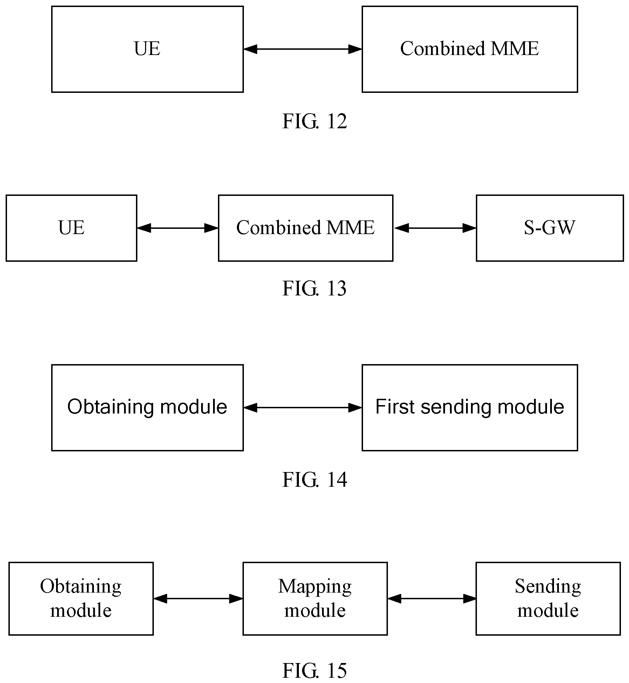

FIG. 12 shows a structure of a system for mobility management processing according to the sixth embodiment. The system includes a combined MME and a UE. The combined MME is connected to a GERAN and a UTRAN to provide communication services for the UE.

The combined MME is configured to: obtain the current first location area information and the current second location area information of the UE, where the current second location area information derives from mapping of the current first location area information; and send a message that carries an activation indication to the UE according to the current first location area information and the current second location area information, where the activation indication is used for instructing the UE to activate the ISR in idle mode.

The UE is configured to: access a core network through the first RAT type, obtain the activation indication sent by the combined MME, and activate the ISR according to the activation indication.

Further, the message sent by the combined MME to the UE carries a TMSI corresponding to the first RAT type, the first location area information, and the TMSI corresponding to the second RAT type, and the second location area information.

Further, in this embodiment, the message may include a combined MME indication additionally. The combined MME indication indicates to the UE that the message is sent by the combined MME. The UE is further configured to maintain the ISR according to the combined MME indication if the bearer changes after the ISR is activated.

In the technical solution under the present invention, if the UE activates the ISR association in the scenario of the combined MME, when the UE perceives a bearer change (for example, a bearer is added, modified or deleted) subsequently, the UE is sure that the UE is registered with the combined MME according to the combined MME indication and chooses to maintain the ISR association rather than deactivate the ISR association.

FIG. 13 shows another structure of a system for mobility management processing according to the sixth embodiment of the present invention. The system includes:
an S-GW, configured to: obtain the message sent by the combined MME, where the message carries the first control plane address, second control plane address, RAT type, combined indication, and activation indication, the activation indication is used for notifying the S-GW to activate the ISR, and the combined indication indicates to the S-GW that the message is sent by the combined MME; activate the ISR according to the activation indication, select the corresponding control plane address from the first control plane address and the second control plane address according to the RAT type, and send a downlink message to the selected control plane address, where the combined indication may be implicit, for example, the S-GW may perceive that the message is sent by the combined MME by obtaining the first control plane address and the second control plane address simultaneously.

Accordingly, the combined MME is further configured to: send a message that carries the first control plane address, second control plane address, RAT type, combined indication, and activation indication to the S-GW, and receive the downlink message sent by the S-GW

The combined MME is further configured to: perform context synchronization of the first RAT type and the second RAT type, and notify the S-GW to perform bearer update and synchronization. Accordingly, the S-GW is configured to perform bearer update and synchronization according to the notification sent by the combined MME.

The system for mobility management processing in this embodiment activates the ISR association of the UE directly, optimizes the process of notifying the S-GW in the ISR activation process, synchronizes contexts in the combined MME and updates the S-GW in time after the bearer changes, and reduces the RAU probability.

### Embodiment 7

FIG. 14 shows a structure of a combined MME according to the seventh embodiment of the present invention. The combined MME is connected to a GERAN and a UTRAN to provide communication services for the UE. The combined MME includes:
an obtaining module, configured to obtain current first location area information and current second location area information of the UE, where the current second location area information derives from mapping of the current first location area information; and
a first sending module, configured to send a message that carries an activation indication to the UE according to the current first location area information and the current second location area information obtained by the obtaining module, where the activation indication is used for instructing the UE to activate the ISR in idle mode.

Further, the message sent by the first sending module to the UE carries a TMSI corresponding to the first RAT type, the first location area information, and the TMSI corresponding to the second RAT type, and the second location area information. This message may further carry a combined MME indication which indicates to the UE that the message is sent by the combined MME, and therefore, the UE can maintain the ISR according to the combined MME indication if the bearer changes after the UE activates the ISR according to the activation indication. By contrast, in the prior art, if the UE perceives a change of the bearer (for example, the bearer is added, modified or deleted), the UE deactivates the ISR association actively.

The obtaining module includes:
a receiving unit, configured to receive current first location area information of a UE; and
a mapping unit, configured to obtain the current second location area information corresponding to the current first location area information received by the receiving unit according to the preset mapping relation.

Further, the combined MME includes:
a second sending module, configured to send a message to the S-GW, where the message carries the first control plane address, second control plane address, RAT type, combined indication, and activation indication; and
a receiving module, configured to receive the downlink message sent by the S-GW

The combined MME further includes:
a synchronizing module, configured to synchronize contexts of the first RAT type and the second RAT type; and
a notifying module, configured to notify the S-GW to perform bearer update and synchronization.

The combined MME in this embodiment activates the ISR association of the UE directly, optimizes the process of notifying the S-GW in the ISR activation process, synchronizes contexts in the combined MME and updates the S-GW in time after the bearer changes, and reduces the RAU probability.

### Embodiment 8

FIG. 15 shows a structure of an access NE according to this embodiment. The access NE includes:
an obtaining module, configured to obtain current first location area information of a UE;
a mapping module, configured to obtain current second location area information corresponding to the current first location area information obtained by the obtaining module according to a preset mapping relation; and
a sending module, configured to send the current first location area information obtained by the obtaining module and the current second location area information obtained by the mapping module through mapping.

The obtaining module includes:
a receiving unit, configured to receive a registration request sent by the UE, where the registration request carries the current first location area information of the UE; and
an obtaining unit, configured to obtain the current first location area information of the UE in the registration request according to the registration request received by the receiving unit.

The registration request is:
an Attach Request that carries the current first location area information of the UE; or,
an RAU Request that carries the current first location area information of the UE.

In conclusion, after obtaining the current first location area information (RAI or TAI) of the UE, the access NE provided in this embodiment obtains the current second location area information (TAI or RAI) according to a preset mapping relation, and reports the first location area information and the second location area information to the combined MME. Therefore, the combined MME can activate the ISR association of the UE directly. In contrast to access of each single access NE, the configuration of the mapping relation involves little data, imposes no heavy load, and brings no impact on the core network.

### Embodiment 9

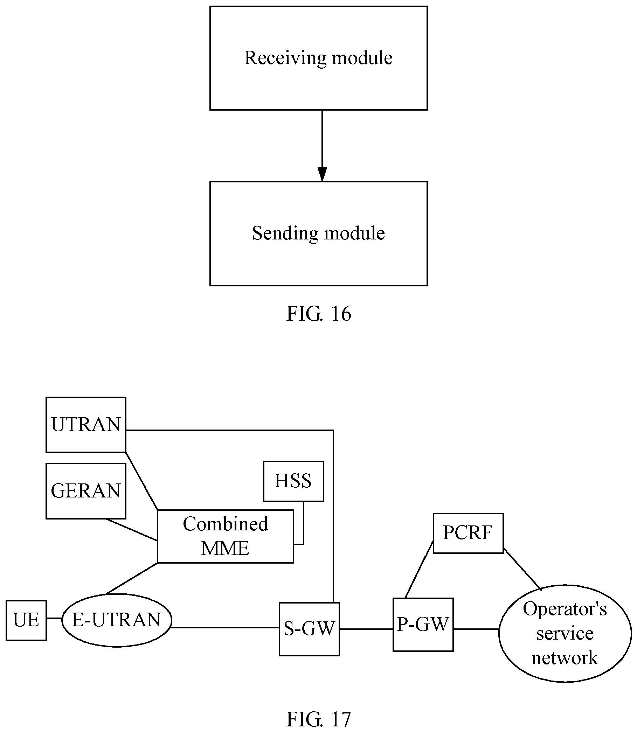

FIG. 16 shows a structure of an S-GW according to this embodiment. The S-GW includes:
a receiving module, configured to receive a message that carries a first control plane address, a second control plane address, and a RAT type from a combined MME; and
a sending module, configured to: select a control plane address from the first control plane address and the second control plane address according to the RAT type received by the receiving module, and send a downlink message to the selected control plane address.

The S-GW further includes:
a synchronizing module, configured to perform bearer update and synchronization according to the notification sent by the combined MME.

The sending module includes:
a requesting unit, configured to: select a control plane address from the first control plane address and the second control plane address according to the RAT type received by the receiving module, and send an update request to the selected control plane address.

The receiving module is further configured to receive an activation indication sent by the combined MME, where the activation indication is used for instructing the S-GW to activate the ISR. Accordingly, the S-GW further includes:
an activating module, configured to activate the ISR according to the activation indication received by the receiving module.

The receiving module is further configured to receive a combined indication sent by the combined MME. The combined indication indicates to the S-GW that the message received by the receiving module is sent by the combined MME.

In conclusion, after obtaining the information such as the control plane address and RAT type reported by the combined MME, the S-GW provided in this embodiment selects a proper control plane address according to the RAT type, and delivers the corresponding message to trigger paging of the UE.

FIG. 17 shows a reference network architecture according to an embodiment of the present invention. In the technical solution provided herein, through a combined MME, the ISR is activated for the UE directly; further, the combined MME reduces costs of operation and maintenance, reduces signaling on each interface, speeds up the mobility management processes such as the handover process, simplifies the implementation of the ISR function, and reduces the signaling load on the S3/Gn interface in the existing architecture.

Through the combined MME, the extra interaction required by the SGSN and the MME for ISR becomes internal. The interaction includes: setup of an ISR association (saving the address of the opposite party mutually), and bearer context synchronization. Because the combined MME enables internal bearer context synchronization, the implementation does not depend on an instruction from the UE or restrict the use of the TMSI. Besides, the combined MME can shield the impact, caused by the ISR, on the S-GW

Some of the steps involved in the embodiments of the present invention may be implemented by software programs. The software programs may be stored in a readable storage medium such as a hard disk or a Compact Disk-Read Only Memory (CD-ROM).

Although the invention has been described through some exemplary embodiments, the invention is not limited to such embodiments.

## Claims

1. A method for mobility management processing, wherein a User Equipment, UE, accesses a core network through a first Radio Access Type, RAT, and the method comprises:
by a combined Mobility Management Entity, MME, obtaining (103, 203) current first location area information and current second location area information of the UE, wherein the combined MME integrates the functions of a MME and a Serving GPRS Support Node, SGSN, wherein the current second location area information derives from mapping of the current first location area information; and
sending (103, 204) a first message that carries an activation indication to the UE according to the current first location area information and the current second location area information, wherein the activation indication is used for instructing the UE to activate Idle mode Signaling Reduction, ISR, in idle mode,
wherein the method further comprises, by a Serving Gateway, S-GW: obtaining a second message sent (301) by the combined MME, wherein: the second message carries a first control plane address, a second control plane address, a RAT type, a combined indication, and an activation indication; the activation indication is used for notifying the S-GW to activate the ISR; and the combined indication indicates to the S-GW that the second message is sent by the combined MME; and
activating the ISR according to the activation indication, selecting a control plane address from the first control plane address and the second control plane address according to the RAT type, and sending a downlink message to the selected control plane address.

2. The method of claim 1, wherein the step of obtaining, by the combined MME, the current first location area information and the current second location area information of the UE comprises:
by an access Network Element, NE, in a first access network, obtaining (102) the current first location area information of the UE, obtaining the current second location area information corresponding to the current first location area information according to a preset mapping relation, and sending (102) the current first location area information and the current second location area information to the combined MME; and
obtaining (103), by the combined MME, the current first location area information and the current second location area information sent by the access NE in the first access network;
or,
sending (202), by the access NE in the first access network, the current first location area information of the UE to the combined MME; and
by the combined MME, obtaining (203) the current first location area information, and obtaining (203) the current second location area information corresponding to the current first location area information according to the preset mapping relation.

3. The method of claim 1, wherein:
the first message further comprises a combined MME indication which indicates to the UE that the first message is sent by the combined MME, and the UE can maintain the ISR according to the combined MME indication when a bearer changes after the UE activates the ISR according to the activation indication.

4. A combined Mobility Management Entity, MME, wherein the combined MME integrates the functions of a MME and a Serving GPRS Support Node, SGSN, wherein: the combined MME is connected to a GSM/EDGE Radio Access Network, GERAN, and a UMTS Terrestrial Radio Access Network, UTRAN, to provide communication services for a User Equipment, UE, and the combined MME comprises:
an obtaining module, configured to obtain current first location area information and current second location area information of the UE, wherein the current second location area information derives from mapping of the current first location area information; and
a first sending module, configured to send a first message that carries an activation indication to the UE according to the current first location area information and the current second location area information obtained by the obtaining module, wherein the activation indication is used for instructing the UE to activate Idle mode Signaling Reduction, ISR in idle mode,
wherein the combined MME further comprises:
a second sending module, configured to send a second message to a Serving Gateway, S-GW, wherein the second message carries a first control plane address, a second control plane address, a Radio Access Type, RAT, a combined indication, and an activation indication; the activation indication is used for notifying the S-GW to activate the ISR; and the combined indication indicates to the S-GW that the message is sent by the combined MME;
and
a receiving module, configured to receive a downlink message sent by the S-GW.

5. The MME of claim 4, wherein the obtaining module comprises:
a receiving module, configured to receive the current first location area information of the UE;
a mapping unit, configured to obtain the current second location area information corresponding to the current first location area information received by the receiving unit according to a preset mapping relation.

6. The MME of claim 4, wherein:
the first message further comprises a combined MME indication which indicates to the UE that the message is sent by the combined MME, so that the UE can maintain the ISR according to the combined MME indication when a bearer changes after the UE activates the ISR according to the activation indication.

7. A system for mobility management processing, comprising a combined Mobility Management Entity, MME, according to claim 4 and a User Equipment, UE, wherein:
the UE is configured to: access a core network through a first Radio Access Type, RAT, obtain the activation indication sent by the combined MME, and activate the ISR according to the activation indication.

8. The system of claim 7, wherein:
the first message further carries a combined MME indication, and the combined MME indication indicates to the UE that the message is sent by the combined MME; and
the UE is further configured to maintain the ISR according to the combined MME indication if a bearer changes after the ISR is activated.

9. The system of claim 7, further comprising a Serving Gateway, S-GW, wherein:
the S-GW is configured to: obtain a message sent by the combined MME, wherein the message carries a first control plane address, a second control plane address, a RAT type, a combined indication, and an activation indication, the activation indication is used for notifying the S-GW to activate the ISR, and the combined indication indicates to the S-GW that the message is sent by the combined MME; activate the ISR according to the activation indication, select a corresponding control plane address from the first control plane address and the second control plane address according to the RAT type, and send a downlink message to the selected control plane address; and
the combined MME is further configured to: send a message that carries the first control plane address, the second control plane address, the RAT type, the combined indication, and the activation indication to the S-GW, and receive the downlink message sent by the S-GW.

## Patentansprüche

1. Verfahren zur Mobilitätsverwaltungsverarbeitung, wobei ein Nutzergerät, UE, durch einen ersten Funkzugangstyp, RAT, auf ein Kernnetz zugreift und das Verfahren Folgendes umfasst:
Beziehen (103, 203) aktueller erster Standortbereichsinformationen und aktueller zweiter Standortbereichsinformationen des UE durch eine kombinierte Mobilitätsverwaltungsinstanz, MME, wobei die kombinierte Mobilitätsverwaltungsinstanz die Funktionen einer MME und eines bedienenden "GPRS Support Nodes", SGSN, vereinigt, wobei sich die aktuellen zweiten Standortbereichsinformationen aus einem Zuordnen der aktuellen ersten Standortbereichsinformationen ableiten, und
Senden (103, 204) einer ersten Mitteilung, die einen Aktivierungshinweis an das UE gemäß den aktuellen ersten Standortbereichsinformationen und den aktuellen zweiten Standortbereichsinformationen enthält, wobei der Aktivierungshinweis verwendet wird, um das UE anzuweisen, in einem Ruhezustand eine Ruhezustandssignalisierungsreduzierung, ISR, zu aktivieren,
wobei das Verfahren ferner ein Beziehen einer durch die kombinierte MME gesendeten (301) zweiten Mitteilung durch ein bedienendes Gateway, S-GW, umfasst,
wobei:
die zweite Mitteilung eine erste Steuerungsebenenadresse, eine zweite Steuerungsebenenadresse, einen RAT-Typ, einen kombinierten Hinweis und einen Aktivierungshinweis enthält, der Aktivierungshinweis verwendet wird, um das S-GW zu benachrichtigen, die ISR zu aktivieren, und der kombinierte Hinweis das S-GW darauf hinweist, dass die zweite Mitteilung durch die kombinierte MME gesendet wird, und
Aktivieren der ISR gemäß dem Aktivierungshinweis, Auswählen einer Steuerungsebenenadresse aus der ersten Steuerungsebenenadresse und der zweiten Steuerungsebenenadresse gemäß dem RAT-Typ und Senden einer Downlink-Mitteilung an die ausgewählte Steuerungsebenenadresse.

2. Verfahren nach Anspruch 1, wobei der Schritt des Beziehens der aktuellen ersten Standortbereichsinformationen und der aktuellen zweiten Standortbereichsinformationen des UE durch die kombinierte MME Folgendes umfasst:
Beziehen (102), durch ein Zugangs-Netzelement, NE, in einem ersten Zugangsnetz, der aktuellen ersten Standortbereichsinformationen des UE, Beziehen der den aktuellen ersten Standortbereichsinformationen entsprechenden aktuellen zweiten Standortbereichsinformationen gemäß einer vorab eingestellten Zuordnungsbeziehung und Senden (102) der aktuellen ersten Standortbereichsinformationen und der aktuellen zweiten Standortbereichsinformationen an die kombinierte MME und
Beziehen (103) der durch das Zugangs-NE im ersten Zugangsnetz gesendeten aktuellen ersten Standortbereichsinformationen und aktuellen zweiten Standortbereichsinformationen durch die kombinierte MME,
oder
Senden (202), durch das Zugangs-NE im ersten Zugangsnetz, der aktuellen ersten Standortbereichsinformationen des UE an die kombinierte MME und
Beziehen (203), durch die kombinierte MME, der aktuellen ersten Standortbereichsinformationen und Beziehen (203) der den aktuellen ersten Standortbereichsinformationen entsprechenden aktuellen zweiten Standortbereichsinformationen gemäß der vorab eingestellten Zuordnungsbeziehung.

3. Verfahren nach Anspruch 1, wobei:
die erste Mitteilung ferner einen Hinweis auf die kombinierte MME umfasst, der das UE darauf hinweist, dass die erste Mitteilung durch die kombinierte MME gesendet wird, und das UE die ISR gemäß dem Hinweis auf die kombinierte MME aufrechterhalten kann, wenn sich ein Träger ändert, nachdem das UE die ISR gemäß dem Aktivierungshinweis aktiviert.

4. Kombinierte Mobilitätsverwaltungsinstanz, MME, wobei die kombinierte MME die Funktionen einer MME und eines bedienenden "GPRS Support Node", SGSN, vereinigt, wobei:
die kombinierte MME mit einem GSM/EDGE-Funkzugangsnetz, GERAN, und einem terrestrischen UMTS-Funkzugangsnetz, UTRAN, verbunden ist, um Kommunikationsdienste für ein Nutzergerät, UE, bereitzustellen, und die kombinierte MME Folgendes umfasst:
ein Bezugsmodul, das dafür konfiguriert ist, aktuelle erste Standortbereichsinformationen und aktuelle zweite Standortbereichsinformationen des UE zu beziehen, wobei sich die aktuellen zweiten Standortbereichsinformationen aus einem Zuordnen der aktuellen ersten Standortbereichsinformationen ableiten, und
ein erstes Sendemodul, das dafür konfiguriert ist, eine erste Mitteilung zu senden, die einen Aktivierungshinweis an das UE gemäß den durch das Bezugsmodul bezogenen aktuellen ersten Standortbereichsinformationen und aktuellen zweiten Standortbereichsinformationen enthält, wobei der Aktivierungshinweis verwendet wird, um das UE anzuweisen, in einem Ruhezustand eine Ruhezustandssignalisierungsreduzierung, ISR, zu aktivieren, wobei die kombinierte MME ferner Folgendes umfasst:
ein zweites Sendemodul, das dafür konfiguriert ist, eine zweite Mitteilung an ein dienendes Gateway, S-GW, zu senden, wobei die zweite Mitteilung eine erste Steuerungsebenenadresse, eine zweite Steuerungsebenenadresse, einen Funkzugangstyp, RAT, einen kombinierten Hinweis und einen Aktivierungshinweis enthält, der Aktivierungshinweis verwendet wird, um das S-GW zu benachrichtigen, die ISR zu aktivieren, und der kombinierte Hinweis das S-GW darauf hinweist, dass die zweite Mitteilung durch die kombinierte MME gesendet wird,
und
ein Empfangsmodul, das dafür konfiguriert ist, eine durch das S-GW gesendete Downlink-Mitteilung zu empfangen.

5. MME nach Anspruch 4, wobei das Bezugsmodul Folgendes umfasst:
ein Empfangsmodul, das dafür konfiguriert ist, die aktuellen ersten Standortbereichsinformationen des UE zu empfangen,
eine Zuordnungseinheit, die dafür konfiguriert ist, die den durch die Empfangseinheit empfangenen aktuellen ersten Standortbereichsinformationen entsprechenden aktuellen zweiten Standortbereichsinformationen gemäß einer vorab eingestellten Zuordnungsbeziehung zu beziehen.

6. MME nach Anspruch 4, wobei:
die erste Mitteilung ferner einen Hinweis auf die kombinierte MME umfasst, der das UE darauf hinweist, dass die Mitteilung durch die kombinierte MME gesendet wird, so dass das UE die ISR gemäß dem Hinweis auf die kombinierte MME aufrechterhalten kann, wenn sich ein Träger ändert, nachdem das UE die ISR gemäß dem Aktivierungshinweis aktiviert.

7. System zur Mobilitätsverwaltungsverarbeitung, umfassend eine kombinierte Mobilitätsverwaltungsinstanz, MME, nach Anspruch 4 und ein Nutzergerät, UE, wobei:
das UE konfiguriert ist, um: durch einen ersten Funkzugangstyp, RAT, auf ein Kernnetz zuzugreifen, den durch die kombinierte MME gesendeten Aktivierungshinweis zu beziehen und gemäß dem Aktivierungshinweis die ISR zu aktivieren.

8. System nach Anspruch 7, wobei:
die erste Mitteilung ferner einen Hinweis auf die kombinierte MME enthält und der Hinweis auf die kombinierte MME das UE darauf hinweist, dass die Mitteilung durch die kombinierte MME gesendet wird, und
das UE ferner dafür konfiguriert ist, die ISR gemäß dem Hinweis auf die kombinierte MME aufrechtzuerhalten, falls sich ein Träger ändert, nachdem die ISR aktiviert wird.

9. System nach Anspruch 7, ferner umfassend ein dienendes Gateway, S-GW, wobei:
das S-GW dafür konfiguriert ist, um: eine durch die kombinierte MME gesendete Mitteilung zu beziehen, wobei die Mitteilung eine erste Steuerungsebenenadresse, eine zweite Steuerungsebenenadresse, einen RAT-Typ, einen kombinierten Hinweis und einen Aktivierungshinweis enthält, der Aktivierungshinweis verwendet wird, um das S-GW zu benachrichtigen, die ISR zu aktivieren, und der kombinierte Hinweis das S-GW darauf hinweist, dass die Mitteilung durch die kombinierte MME gesendet wird, die ISR gemäß dem Aktivierungshinweis zu aktivieren, aus der ersten Steuerungsebenenadresse und der zweiten Steuerungsebenenadresse gemäß dem RAT-Typ eine entsprechende Steuerungsebenenadresse auszuwählen und eine Downlink-Mitteilung an die ausgewählte Steuerungsebenenadresse zu senden, und
die kombinierte MME ferner konfiguriert ist, um: eine Mitteilung, welche die erste Steuerungsebenenadresse, die zweite Steuerungsebenenadresse, den RAT-Typ, den kombinierten Hinweis und den Aktivierungshinweis enthält, an das S-GW zu senden und die durch das S-GW gesendete Downlink-Mitteilung zu empfangen.

## Revendications

1. Procédé de traitement de gestion de la mobilité, dans lequel un équipement utilisateur, UE, accède à un réseau d'infrastructure par l'intermédiaire d'un premier type d'accès radio, RAT, et le procédé comprend :
par une entité de gestion de la mobilité, MME, combinée, obtenir (103, 203) des premières informations de localisation courantes et des deuxièmes informations de localisation courantes de l'UE, la MME combinée intégrant les fonctions d'une MME et d'un noeud de support GPRS de desserte, SGSN, les deuxièmes informations de localisation courantes étant dérivées à partir d'un mappage des premières informations de localisation courantes ; et
envoyer (103, 204) un premier message qui contient une indication d'activation à l'UE selon les premières informations de localisation courantes et les deuxièmes informations de localisation courantes, l'indication d'activation étant utilisée pour ordonner à l'UE d'activer une réduction de signalisation en mode inactif, ISR, dans un mode inactif,
le procédé comprenant en outre, par une passerelle de desserte, S-GW :
obtenir un deuxième message envoyé (301) par la MME combinée, le deuxième message contenant une première adresse de plan de contrôle, une deuxième adresse de plan de contrôle, un type RAT, une indication combinée, et une indication d'activation ; l'indication d'activation étant utilisée pour notifier à la S-GW d'activer l'ISR ; et l'indication combinée indiquant à la S-GW que le deuxième message est envoyé par la MME combinée ; et
activer l'ISR selon l'indication d'activation, sélectionner une adresse de plan de contrôle à partir de la première adresse de plan de contrôle et de la deuxième adresse de plan de contrôle selon le type RAT, et envoyer un message de liaison descendante à l'adresse de plan de contrôle sélectionnée.

2. Procédé selon la revendication 1, dans lequel l'étape consistant à obtenir, par la MME combinée, les premières informations de localisation courantes et les deuxièmes informations de localisation courantes de l'UE comprend :
par un élément réseau, NE, d'accès dans un premier réseau d'accès, obtenir (102) les premières informations de localisation courantes de l'UE, obtenir les deuxièmes informations de localisation courantes correspondant aux premières informations de localisation courantes selon une relation de mappage prédéfinie, et envoyer (102) les premières informations de localisation courantes et les deuxièmes informations de localisation courantes à la MME combinée ; et
obtenir (103), par la MME combinée, les premières informations de localisation courantes et les deuxièmes informations de localisation courantes envoyées par le NE d'accès dans le premier réseau d'accès ;
ou,
envoyer (202), par le NE d'accès dans le premier réseau d'accès, les premières informations de localisation courantes de l'UE à la MME combinée ; et
par la MME combinée, obtenir (203) les premières informations de localisation courantes, et obtenir (203) les deuxièmes informations de localisation courantes correspondant aux premières informations de localisation courantes selon la relation de mappage prédéfinie.

3. Procédé selon la revendication 1, dans lequel :
le premier message comprend en outre une indication de MME combinée qui indique à l'UE que le premier message est envoyé par la MME combinée, et que l'UE peut maintenir l'ISR selon l'indication de MME combinée lorsqu'un support change après que l'UE a activé l'ISR selon l'indication d'activation.

4. Entité de gestion de la mobilité, MME, combinée, la MME combinée intégrant les fonctions d'une MME et d'un noeud de support GPRS de desserte, SGSN :
la MME combinée étant connectée à un réseau d'accès radio GSM/EDGE, GERAN, et à un réseau d'accès radio terrestre UMTS, UTRAN, pour fournir des services de communication à un équipement utilisateur, UE, et la MME combinée comprenant :
un module d'obtention, configuré pour obtenir des premières informations de localisation courantes et des deuxièmes informations de localisation courantes de l'UE, les deuxièmes informations de localisation courantes étant dérivées à partir d'un mappage des premières informations de localisation courantes ; et
un premier module d'envoi, configuré pour envoyer un premier message qui contient une indication d'activation à l'UE selon les premières informations de localisation courantes et les deuxièmes informations de localisation courantes obtenues par le module d'obtention, l'indication d'activation étant utilisée pour ordonner à l'UE d'activer une réduction de signalisation en mode inactif, ISR, dans un mode inactif, la MME combinée comprenant en outre :
un deuxième module d'envoi, configuré pour envoyer un deuxième message à une passerelle de desserte, S-GW, le deuxième message contenant une première adresse de plan de contrôle, une deuxième adresse de plan de contrôle, un type d'accès radio, RAT, une indication combinée, et une indication d'activation ; l'indication d'activation étant utilisée pour notifier à la S-GW d'activer l'ISR ; et l'indication combinée indiquant à la S-GW que le message est envoyé par la MME combinée ; et
un module de réception, configuré pour recevoir un message de liaison descendante envoyé par la S-GW.

5. MME selon la revendication 4, dans laquelle le module d'obtention comprend :
un module de réception, configuré pour recevoir les premières informations de localisation courantes de l'UE ;
une unité de mappage, configurée pour obtenir les deuxièmes informations de localisation courantes correspondant aux premières informations de localisation courantes reçues par l'unité de réception selon une relation de mappage prédéfinie.

6. MME selon la revendication 4, dans laquelle :
le premier message comprend en outre une indication de MME combinée qui indique à l'UE que le message est envoyé par la MME combinée, afin que l'UE puisse maintenir l'ISR selon l'indication de MME combinée lorsqu'un support change après que l'UE a activé l'ISR selon l'indication d'activation.

7. Système de traitement de gestion de la mobilité, comprenant une entité de gestion de la mobilité, MME, combinée, selon la revendication 4 et un équipement utilisateur, UE, dans lequel :
l'UE est configuré pour : accéder à un réseau d'infrastructure par l'intermédiaire d'un premier type d'accès radio, RAT, pour obtenir l'indication d'activation envoyée par la MME combinée, et activer l'ISR selon l'indication d'activation.

8. Système selon la revendication 7, dans lequel :
le premier message contient en outre une indication de MME combinée, et l'indication de MME combinée indique à l'UE que le message est envoyé par la MME combinée ; et
l'UE est en outre configuré pour maintenir l'ISR selon l'indication de MME combinée si un support change après que l'ISR a été activé.

9. Système selon la revendication 7, comprenant en outre une passerelle de desserte, S-GW, dans lequel :
la S-GW est configurée pour : obtenir un message envoyé par la MME combinée, le message contenant une première adresse de plan de contrôle, une deuxième adresse de plan de contrôle, un type RAT, une indication combinée, et une indication d'activation, l'indication d'activation étant utilisée pour notifier à la S-GW d'activer l'ISR, et l'indication combinée indiquant à la S-GW que le message est envoyé par la MME combinée ; activer l'ISR selon l'indication d'activation, sélectionner une adresse de plan de contrôle correspondante à partir de la première adresse de plan de contrôle et de la deuxième adresse de plan de contrôle selon le type RAT, et envoyer un message de liaison descendante à l'adresse de plan de contrôle sélectionnée ; et
la MME combinée est en outre configurée pour : envoyer un message qui contient la première adresse de plan de contrôle, la deuxième adresse de plan de contrôle, le type RAT, l'indication combinée, et l'indication d'activation à la S-GW, et recevoir le message de liaison descendante envoyé par la S-GW.
